# EUROPEAN PATENT APPLICATION

(11) **EP 4 250 161 A1**
(43) Date of publication of application: **27.09.2023**
(21) Application number: 22191110.0
(22) Date of filing: 19.08.2022
(51) Int. Cl.: G06F 21/62, G06F 21/64

(54) **DATA TRANSFER SYSTEM AND DATA TRANSFER METHOD**

(30) Priority: 24.03.2022 JP 2022048489
(71) Applicant: Hitachi, Ltd., Tokyo 100-8280 (JP)
(72) Inventor: HASEGAWA, Shinsuke, Tokyo, 100-8280 (JP)
(74) Representative: MERH-IP Matias Erny Reichl Hoffmann Patentanwälte PartG mbB

(57) **Abstract**

A data transfer system includes a plurality of blockchain nodes having a node storage unit, a data provision server that retains data, and a data acquisition server that does not have the data, wherein each of the plurality of blockchain nodes comprises an access permission smart contract which records in the node storage unit, as access right information, token validation data for validating a token when permitting access to a request for an access right to the data, and a token validation smart contract which validates the token using the token validation data, the data acquisition server comprises: an access right acquisition unit which requests the access permission smart contract to grant an access right to the data; and a data acquisition unit which sends the token to the data provision server and acquires the data, and the data provision server includes: an access right validation unit which causes the token validation smart contract to validate the token sent from the data acquisition server; and a data provision unit which provides the data to the data acquisition server when validation by the access right validation unit is successful.

## Description

### TECHNICAL FIELD

The present invention relates to a data transfer system and a data transfer method.

### BACKGROUND ART

The distribution of electronic information via a communication network is being popularly practiced. In recent years, blockchains are attracting attention due to their strength against falsification, and various utilization methods are being proposed. PTL 1 discloses a computer implementation method of reading data from a data source outside a blockchain network, wherein the method includes a step of receiving, from a client in the blockchain network, a request for data from the data source based on a relay system smart contract to be executed in the blockchain network, a step of sending the request to a relay system outside the blockchain network based on the relay system smart contract, wherein the relay system includes a multi-node cluster including a plurality of relay system nodes, a step of receiving a result provided from a relay system node of the multi-node cluster based on the relay system smart contract, wherein the result is digitally signed with a digital signature using a private key of the relay system and the result includes the requested data from the data source, a step of validating that the relay system node is registered in the relay system smart contract based on the relay system smart contract, a step of validating a security of the result with the public key of the relay system node and the digital signature based on the relay system smart contract in response to the validation of the relay system node being registered in the relay system smart contract, and a step of sending the result to the client in response to the validation of the security of the result.

### CITATION LIST

### PATENT LITERATURE

[PTL 1] Japanese Unexamined Patent Application Publication (Translation of PCT Application) No. 2020-527259

### SUMMARY OF THE INVENTION

### PROBLEMS TO BE SOLVED BY THE INVENTION

With the invention described in PTL 1, data stored outside the blockchain cannot be transferred.

### MEANS TO SOLVE THE PROBLEMS

According to the 1st aspect of the present invention, a data transfer system including a plurality of blockchain nodes having a node storage unit, a data provision server that retains data, and a data acquisition server that does not have the data, wherein each of the plurality of blockchain nodes includes an access permission smart contract which records in the node storage unit, as access right information, token validation data for validating a token when permitting access to a request for an access right to the data, and a token validation smart contract which validates the token using the token validation data, the data acquisition server includes: an access right acquisition unit which requests the access permission smart contract to grant an access right to the data; and a data acquisition unit which sends the token to the data provision server and acquires the data, and the data provision server includes: an access right validation unit which causes the token validation smart contract to validate the token sent from the data acquisition server; and a data provision unit which provides the data to the data acquisition server when validation by the access right validation unit is successful.

According to the 2nd aspect of the present invention, a data transfer method to be executed by a data transfer system including a plurality of blockchain nodes having a node storage unit, a data provision server that retains data, and a data acquisition server that does not have the data, wherein each of the plurality of blockchain nodes includes an access permission smart contract which records in the node storage unit, as access right information, token validation data for validating a token when permitting access to a request for an access right to the data, and a token validation smart contract which validates the token using the token validation data, the data acquisition server executes: access right acquisition processing of requesting the access permission smart contract to grant an access right to the data; and data acquisition processing of sending the token to the data provision server and acquiring the data, and the data provision server executes: access right validation processing of causing the token validation smart contract to validate the token sent from the data acquisition server; and data provision processing of providing the data to the data acquisition server when validation in the access right validation processing is successful.

### ADVANTAGEOUS EFFECTS OF THE INVENTION

According to the present invention, data stored outside the blockchain can be transferred.

### BRIEF DESCRIPTION OF DRAWINGS

[Fig. 1]

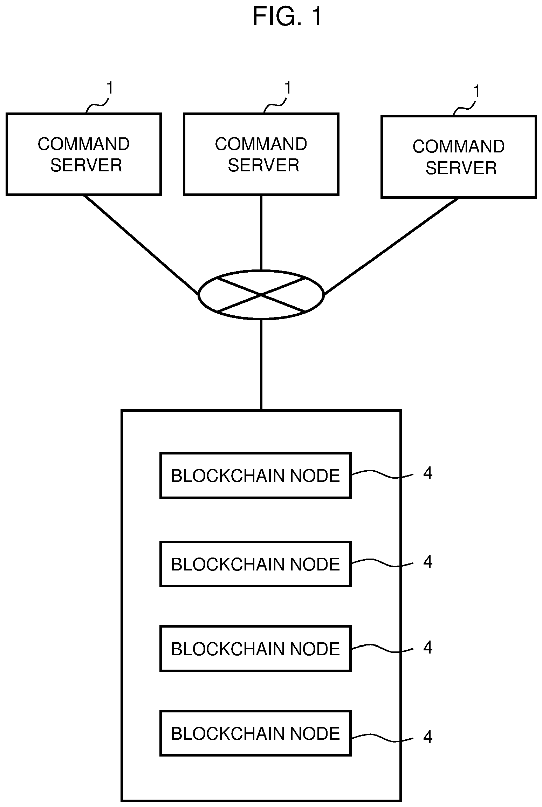

   Fig. 1 is an overall schematic configuration diagram of the data transfer system.
[Fig. 2]

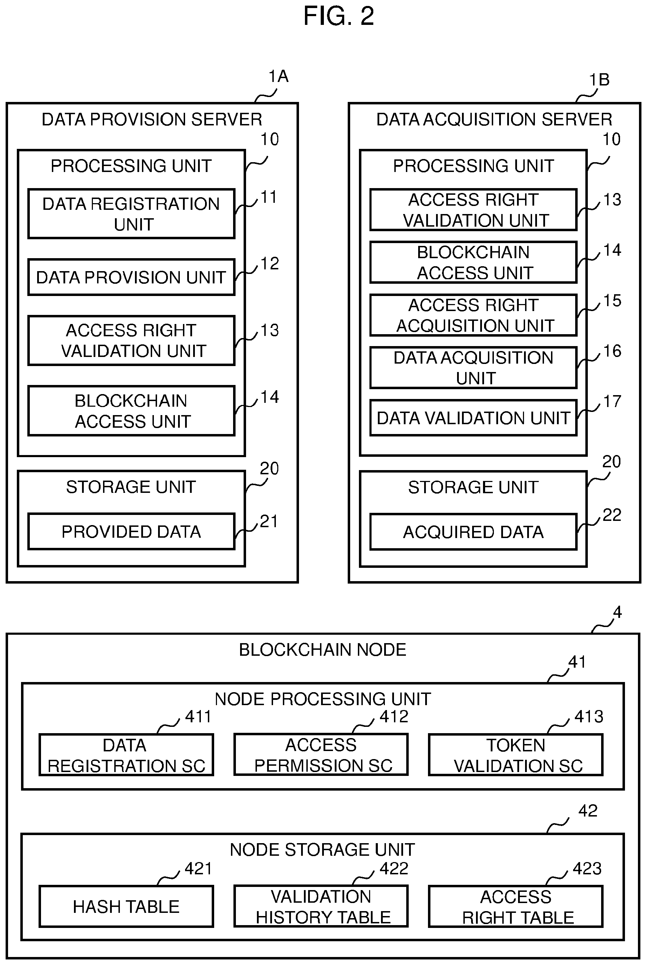

   Fig. 2 is a functional block diagram of the data provision server, the data acquisition server, and the blockchain node.
[Fig. 3]

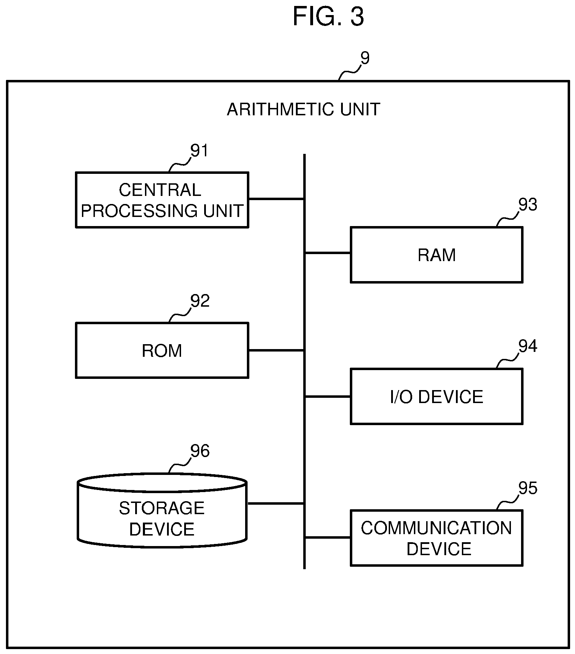

   Fig. 3 is a hardware configuration diagram of the arithmetic unit.
[Fig. 4]

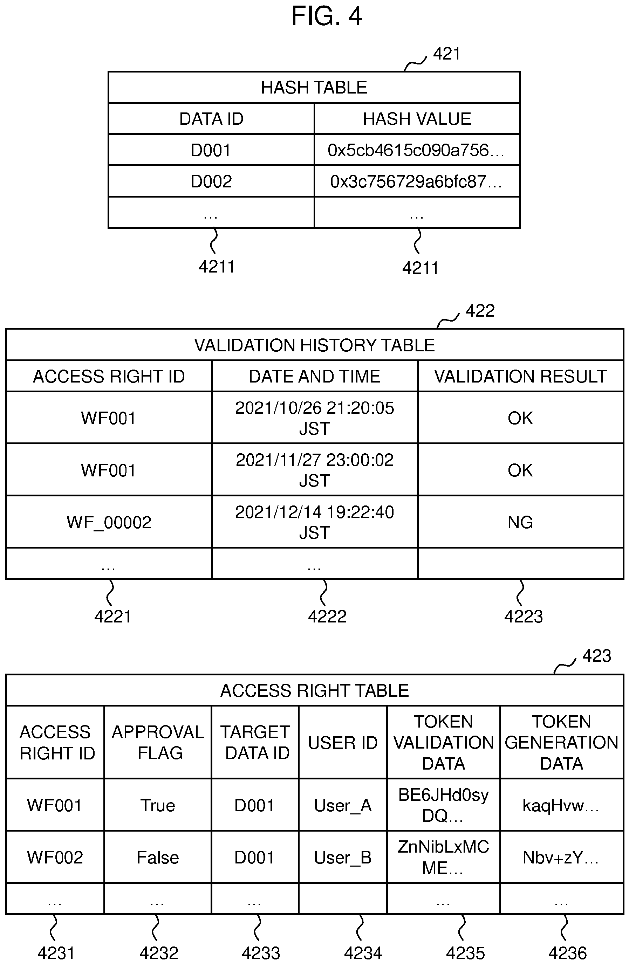

   Fig. 4 is a diagram showing an example of the hash table, the validation history table, and the access right table.
[Fig. 5]

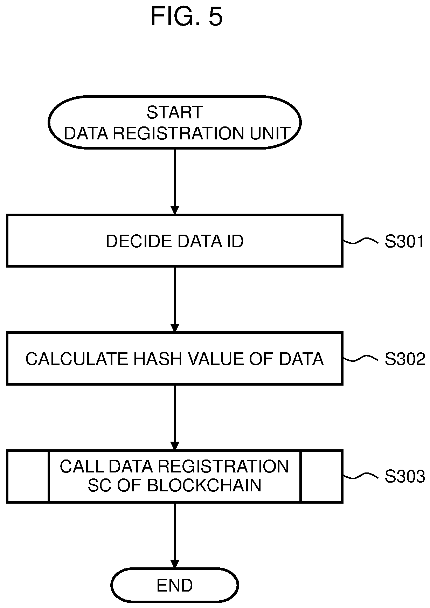

   Fig. 5 is a flowchart showing the processing of the data registration unit.
[Fig. 6]

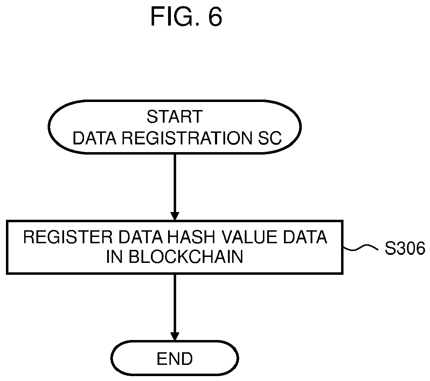

   Fig. 6 is a flowchart showing the processing of the data registration SC.
[Fig. 7]

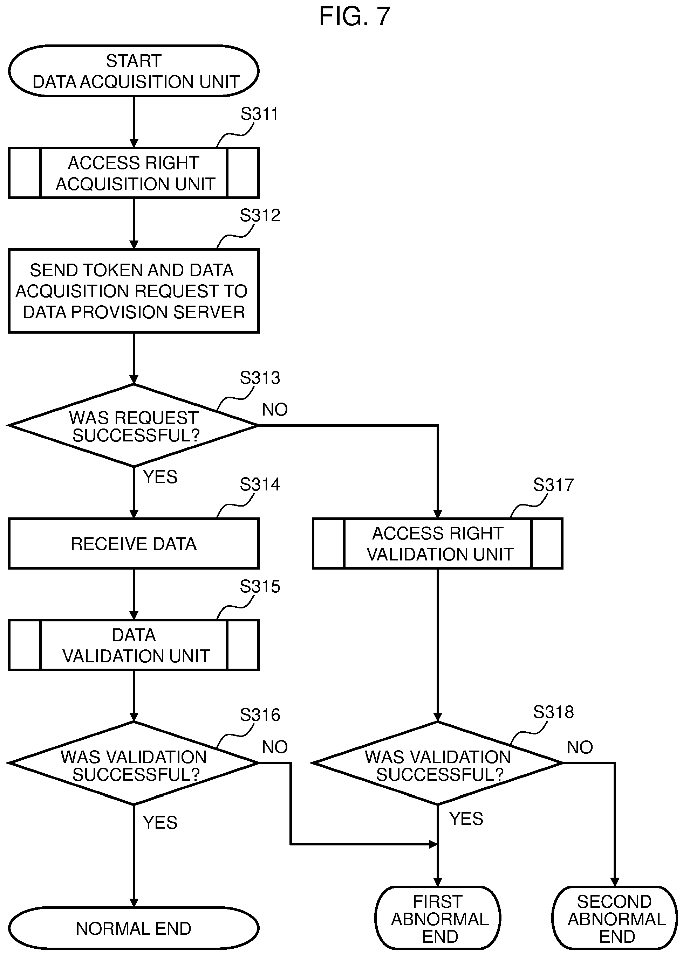

   Fig. 7 is a flowchart showing the processing of the data acquisition unit.
[Fig. 8]

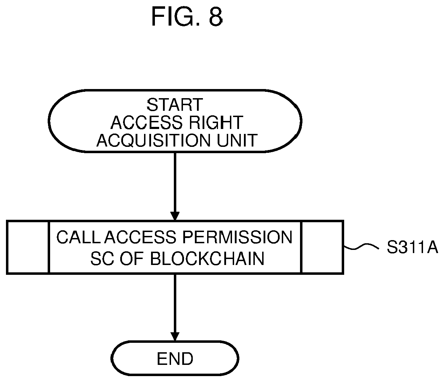

   Fig. 8 is a flowchart showing the processing of the access right acquisition unit.
[Fig. 9]

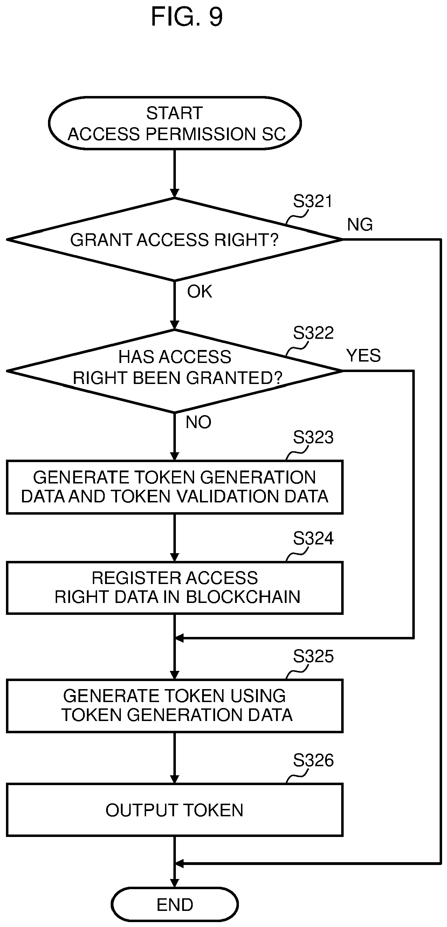

   Fig. 9 is a flowchart showing the processing of the access permission SC.
[Fig. 10]

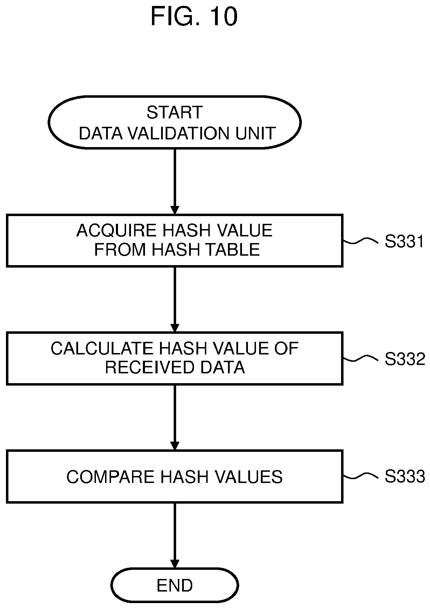

   Fig. 10 is a flowchart showing the processing of the data validation unit.
[Fig. 11]

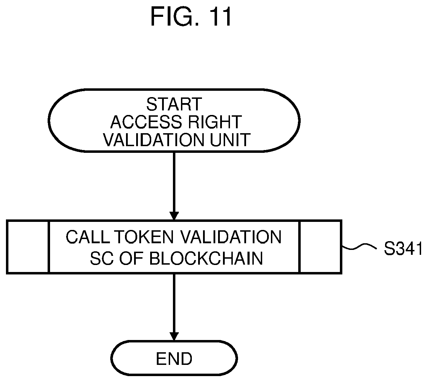

   Fig. 11 is a flowchart showing the processing of the access right validation unit.
[Fig. 12]

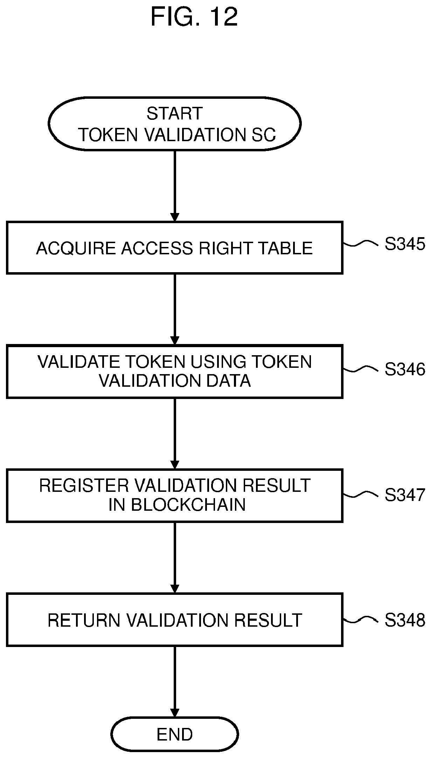

   Fig. 12 is a flowchart showing the processing of the token validation SC.
[Fig. 13]

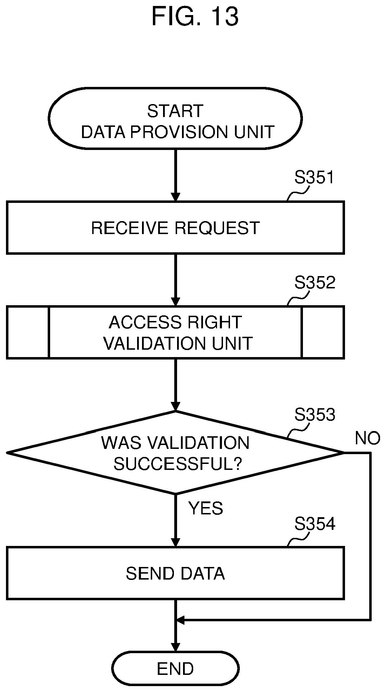

   Fig. 13 is a flowchart showing the processing of the data provision unit.
[Fig. 14]

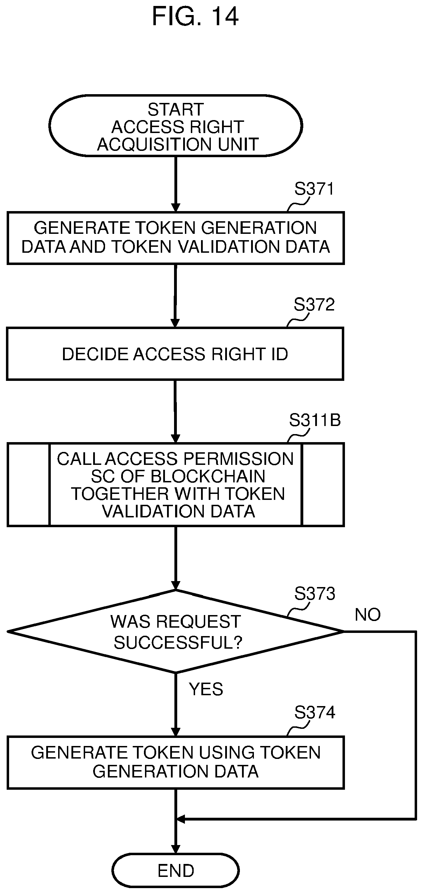

   Fig. 14 is a flowchart showing the processing of the access right acquisition unit in modified example 1.
[Fig. 15]

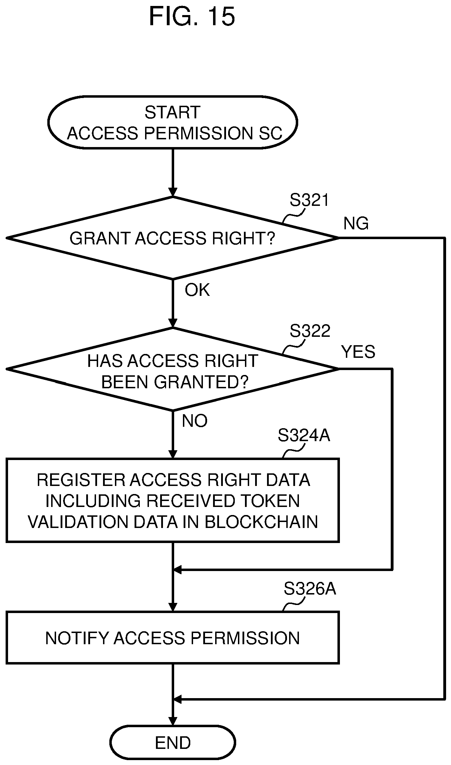

   Fig. 15 is a flowchart showing the processing of the access permission SC in modified example 1.
[Fig. 16]

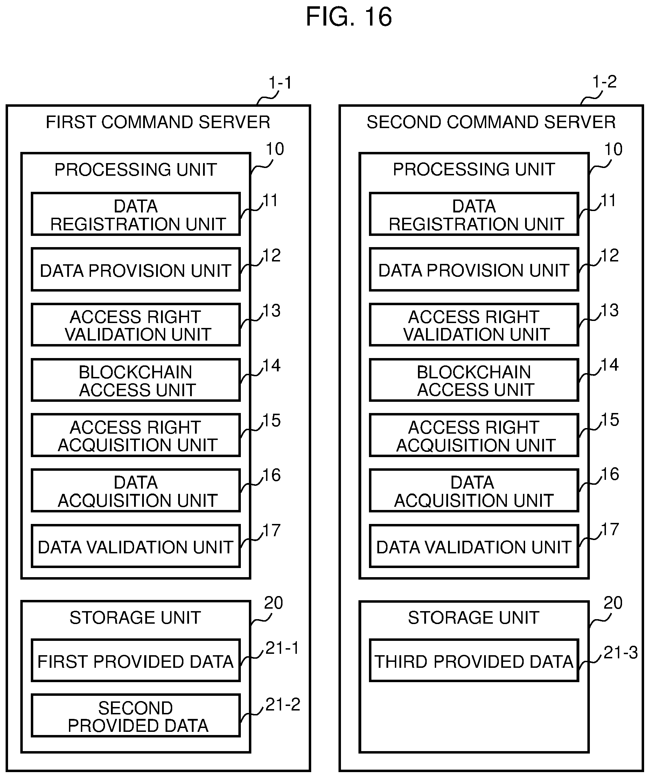

   Fig. 16 is a functional block diagram of the command servers in modified example 2.

### DESCRIPTION OF EMBODIMENTS

### - First embodiment -

The first embodiment of the data transfer system is now explained with reference to Fig. 1 to Fig. 13. Fig. 1 is an overall schematic configuration diagram of the data transfer system 100. The data transfer system 100 includes a plurality of command servers 1, and a plurality of blockchain nodes 4. In Fig. 1, while the data transfer system 100 includes three command servers 1 and four blockchain nodes 4, the quantity is irrelevant so as long as multiple command servers 1 and multiple blockchain nodes 4 are provided. The respective command servers 1 and blockchain nodes 4 only need to be able to communicate with each other, and may adopt an arbitrary network configuration.

The command server outputs a command to the blockchain, and sends and receives data without going through the blockchain. Specifically, the command server 1 outputs an operation command to a smart contract (hereinafter indicated as "SC") on the blockchain node 4. A smart contract is a program that runs on the blockchain, and is operated in parallel in each of the blockchain nodes 4. The plurality of command servers 1 may each have the same function, a function related to the provision of data, or a function related to the acquisition of data. In the following explanation, the command server 1 having a function related to the provision of data is hereinafter referred to as the "data provision server 1A", and the command server 1 having a function related to the acquisition of data is hereinafter referred to as the "data acquisition server 1B". The details will be described later. The configuration and operation of the respective blockchain nodes 4 are the same.

Fig. 2 is a functional block diagram which expresses, as functional blocks, the respective functions of the data provision server 1A, the data acquisition server 1B, and the blockchain node 4. Nevertheless, Fig. 2 also indicates information that is respectively stored therein.

The data provision server 1A comprises a processing unit 10A, and the processing unit 10A comprises, as its functions, a data registration unit 11, a data provision unit 12, an access right validation unit 13, and a blockchain access unit 14. The data acquisition server 1B comprises a processing unit 10B, and the processing unit 10B comprises, as its functions, an access right validation unit 13, a blockchain access unit 14, an access right acquisition unit 15, a data acquisition unit 16, and a data validation unit 17. In other words, the access right validation unit 13 and the blockchain access unit 14 are included in both the data provision server 1A and the data acquisition server 1B.

The data provision server 1A comprises a storage unit 20A, and the storage unit 20A stores provided data 21 which is data to be provided to the storage unit 20A. The data acquisition server 1B comprises a storage unit 20B, and the storage unit 20B stores acquired data 22 which is data acquired from the data provision server 1A. In this embodiment, explained is the processing of the data provision server 1A providing the provided data 21 to the data acquisition server 1B. That is, in this embodiment, while the provided data 21 and the acquired data 22 are the same, different names are used for the sake of explanation.

The blockchain node 4 comprises a node processing unit 41 and a node storage unit 42. The node processing unit 41 has three smart contracts; that is, a data registration SC 411, an access permission SC 412, and a token validation SC 413. The node storage unit 42 stores a hash table 421, a validation history table 422, and an access right table 423.

The blockchain access unit 14 functions as an interface for the data provision server 1A and the data acquisition server 1B to access the respective smart contracts of the blockchain. In the following explanation, processing related to the blockchain access unit 14 is omitted for simplifying the description. For example, while the data registration unit 11 accesses the data registration SC 411 via the blockchain access unit 14, in the following explanation the process of going through the blockchain access unit 14 is not described.

Fig. 3 is a hardware configuration diagram of an arithmetic unit 9 which represents the data provision server 1A, the data acquisition server 1B, and the blockchain node 4. Nevertheless, the data provision server 1A, the data acquisition server 1B, and the blockchain node 4 may each be configured from an independent arithmetic unit 9, or may be configured from a plurality of arithmetic units 9.

The arithmetic unit 9 comprises a central processing unit 91, a ROM 92 as a read-only storage device, a RAM 93 as a random access storage device, an I/O device 94 as a user interface, a communication device 95, and a storage device 96. The central processing unit 91 performs the various operations described above by reading the programs stored in the ROM 92 into the RAM 93 and then executing the programs. The I/O device 94 is a user interface to be used by the person handling the command server 1, and is a keyboard, a mouse, a display or the like. The communication device 95 is a communication module for communicating with other devices. The communication realized by the communication device 95 may be wired or wireless. The storage device 96 is a non-volatile storage device such as a hard disk drive.

The arithmetic unit 9 may also be realized with an FPGA (Field Programmable Gate Array), which is a rewritable logical circuit, or an ASIC (Application Specific Integrated Circuit), which is an application specific integrated circuit, in substitute for the combination of the central processing unit 91, the ROM 92, and the RAM 93. Moreover, the arithmetic unit 9 may also be realized with a combination of different configurations, such as the central processing unit 91, the ROM 92, the RAM 93 and the FPGA, in substitute for the combination of the central processing unit 91, the ROM 92, and the RAM 93.

Fig. 4 is a diagram showing an example of the information stored in the node storage unit 42; that is, an example of the hash table 421, the validation history table 422, and the access right table 423.

A hash table 221 is configured from a plurality of records, and each record has the fields of a data ID 4211 and a hash value 4212. The data ID 2211 is an identifier for identifying the provided data 21 in the data transfer system 100. The hash value 4212 is a hash value of the provided data 21. Each record of the hash table 221 is registered with the data registration SC 411.

A validation history table 222 is configured from a plurality of records, and each record has the fields of an access right ID 4221, a date and time 4222, and a validation result 4223. The access right ID 4221 is an identifier for identifying a request of granting an access right. In other words, even when the same provided data 21 is the target, when the users requesting the grant of an access right are different, a different access right ID 4221 is set. The date and time 4222 is the date and time that the validation was performed. The validation result 4223 is a result of the validation, and "OK" is stored when the user has an access right for accessing the provided data 21, and "NG" is stored when the user does not have an access right for accessing the provided data 21. Each record of the validation history table 222 is registered with the access right validation unit 13.

The access right table 223 is configured from a plurality of records, and each record has the fields of an access right ID 4231, an approval flag 4232, a target data ID 4233, a user ID 4234, token validation data 4235, and token generation data 4236. The access right ID 4231 is an identifier for identifying a request of granting an access right, and is the same as the access right ID 4221 of the validation history table 422.

The approval flag 4232 indicates the accessibility to the provided data 21, and "True" is stored when access is permitted, and "False" is stored when access is denied. The target data ID 4233 is an identifier for identifying the provided data 21, and is the same as the data ID 4211 in the hash table 421. The user ID 4234 is an identifier for identifying the user who requested the access right. The token validation data 4235 is data to be used for validating a token. The token generation data 4236 is data to be used for generating a token.

Fig. 5 is a flowchart showing the processing of the data registration unit 11. The data registration unit 11 is called together with the user's designation of the data to be registered. Foremost, in step S301, the data registration unit 11 decides the data ID of the data to be registered. The data ID is an identifier for identifying individual data in the data transfer system 1000. The data ID may be created by adding a random character string, which is decided by the data registration unit, to the character string designated by the user, or an ID may be assigned from a configuration (not shown) that manages the data ID.

In step S302, the data registration unit 11 calculates the hash value of the data to be registered. There is no particular limitation regarding the method of calculating the hash value, and various publicly known methods may be used. In subsequent step S303, the data registration unit 11 calls the data registration SC of the blockchain and sends the data ID and the hash value. Processing of the data registration unit has been described above.

Fig. 6 is a flowchart showing the processing of the data registration SC 21. The data registration SC 21, in step S306, registers the received data ID and hash value as new records of the hash table 2321, and then ends the processing shown in Fig. 6.

Fig. 7 is a flowchart showing the processing of the data acquisition unit 16. The data acquisition unit 16 is called together with the data ID of the data to be acquired by the user. Foremost, in step S311, the data acquisition unit 16 calls the access right acquisition unit 15 and causes it to acquire the access right for accessing the data to be acquired. Details of step S311 will be described later. Specifically, the data acquisition unit 16 outputs the data ID of the data to be acquired to the access right acquisition unit 15, and acquires a token from the access right acquisition unit 15. Note that, while not shown in this flowchart, if the access right could not be obtained in step S311, the processing of Fig. 7 will result in an abnormal end.

In subsequent step S312, the data acquisition unit 16 sends the token and the data acquisition request to the data holding server, and obtains a reply of the request. In subsequent step S313, the data acquisition unit 16 determines whether the request in step S312 was successful. When the data acquisition unit 16 determines that the reply from the data holding server was "approved", it proceeds to step S314, and when the data acquisition unit 16 determines that the reply from the data holding server was "denied", it proceeds to step S317.

In step S314, the data acquisition unit 16 receives data from the data holding server. In subsequent step S315, the data validation unit 17 validates the data received in step S314. In subsequent step S316, the data acquisition unit 16 determines whether the validation in step S315 was successful. The process results in a normal end when the data acquisition unit 16 determines that the validation was successful, and the process results in a first abnormal end when the data acquisition unit 16 determines that the validation was unsuccessful.

In step S317 that is executed when a negative determination is obtained in step S313, the data acquisition unit 16 causes the access right validation unit 13 to validate the access right. In subsequent step S318, the data acquisition unit 16 determines whether the validation in step S317 was successful, and the process results in a first abnormal end when the data acquisition unit 16 determines that the validation was successful, and the process result in a second abnormal end when the data acquisition unit 16 determines that the validation was unsuccessful. The explanation of Fig. 7 was provided above.

Fig. 8 is a flowchart showing the processing of the access right acquisition unit 15. The access right acquisition unit 15 is called together with the data ID of the data to be acquired by the user. In step S311A, the access right acquisition unit 15 calls the access permission SC 412 of the blockchain together with the user ID of the user requesting access and the data ID, and then ends the processing shown in Fig. 8.

Fig. 9 is a flowchart showing the processing of the access permission SC 412. The access permission SC 412 is at least called together with the user ID of the user that requested the access right, and the data ID of the access target.

The access permission SC 412 foremost, in step S321, determines whether to grant access to the user that requested the access right. There is no particular limitation regarding the method of determining whether to grant the access right, and various publicly known methods may be used. For example, the access permission SC 412 may determine whether to grant access based on whether the combination of the target user ID and the target data ID exists in an access permission list (not shown), or based on the reply obtained by making an inquiry to the outside. The access permission SC 412 proceeds to step S322 when it determines to grant the access right, and ends the processing of Fig. 9 when it determines not to grant the access right.

In step S322, the access permission SC 412 refers to the access right table 223, and determines whether the access right has already been granted. The access permission SC 412 proceeds to step S325 when it determines that the access right of the same data has already been granted to the same user, and proceeds to step S323 when it determines that the access right has not been granted.

In step S323, the access permission SC 412 generates token generation data and token validation data. The token generation data and the token validation data will suffice so as long as they can be used for the generation and validation of a token, and there is no particular limitation in the type of data. For example, the access permission SC 412 generates a pair of a public key and a private key, and may use it as the token generation data and the token validation data. In subsequent step S324, the access permission SC 412 generates a new record in the access right table 223, registers the data ID, the user ID, and the token generation data and the token validation data generated in step S323, and then proceeds to step S325.

In step S325, the access permission SC 412 uses the token generation data and generates a token. Nevertheless, when the access permission SC 412 proceeds from step S324 to step S325, it uses the token generation data generated in step S323. Moreover, when the access permission SC 412 proceeds from step S322 to step S325, it uses the token generation data described in the corresponding record in the access right table 223. While there is no particular limitation in the method of the access permission SC 412 using the token generation data and generating a token, for example, the access permission SC 412 may also use the token generation data and generate an electronic signature for the access right ID, and use it as a token.

The access permission SC 412 may decide the access right ID so that it has uniqueness in the data transfer system 100, and, for example, may use serial numbers or the date and time at the time of processing. In subsequent step S326, the access permission SC 412 outputs the token generated in step S325 to the access right acquisition unit 15, and then ends the processing shown in Fig. 9.

Fig. 10 is a flowchart showing the processing of the data validation unit 17. The data validation unit 17 is called together with the data received from the data provision server 1A and the data ID of that data. The data validation unit 17 refers to the hash table 221 and acquires the hash value corresponding to the data ID to be validated. In subsequent step S332, the data validation unit 17 calculates the hash value of the received data. In subsequent step S333, the data validation unit 17 compares the hash value acquired in step S331 and the hash value calculated in step S332. The data validation unit 17 returns a message to the effect that the validation was successful when the two are the same, and returns a message to the effect that the validation was unsuccessful when the two are not the same.

Fig. 11 is a flowchart showing the processing of the access right validation unit 13. The access right validation unit 13 calls the token validation SC of the blockchain, and then ends the processing shown in Fig. 11. The operation of the token validation SC will be explained in subsequent Fig. 12.

Fig. 12 is a flowchart showing the processing of the token validation SC 413. There are cases where the token validation SC 413 is called from the data holding server, and cases where the token validation SC 413 is called from the data acquisition server. In either case, the token validation SC 413 is called together with the token and the access right ID in which that token is used.

In step S345, the token validation SC 413 reads the access right table 223, and identifies the corresponding record. In subsequent step S346, the token validation SC 413 uses the token validation data in the record identified in step S345 and validates the token. While there is no particular limitation in the method of validating the token, for example, when the token is an electronic signature obtained using the token generation data intended for the access right ID, the token validation SC 413 validates the electronic signature using the token validation data.

In subsequent step S347, the token validation SC 413 registers the validation result in step S346 as a new record of the validation history table 222. Specifically, the access right ID 2221 stores the access right ID used at the time of calling, the date and time 2222 stores the date and time that the processing was performed, and the validation result 2223 stores the validation result of step S346. In subsequent step S348, the token validation SC 413 outputs the validation result in step S346, and then ends the processing shown in Fig. 12.

Fig. 13 is a flowchart showing the processing of the data provision unit 12. The data provision unit 12 foremost, in step S351, receives a data provision request. In this data provision request, the combination of the access-target data ID, user ID, and token, or the combination of the access right ID and token is received. In subsequent step S352, the data provision unit 12 calls the access right validation unit and acquires the validation result. In subsequent step S353, the data provision unit 12 proceeds to step S3554 when it determines that the validation was successful, and ends the processing shown in Fig. 13 when it determines that the validation was unsuccessful.

According to the first embodiment described above, the following effects are yielded.
(1) A data transfer system 100 comprises a plurality of blockchain nodes 4 having a node storage unit 42, a data provision server 1A that retains provided data 21, and a data acquisition server 1B that does not have the provided data 21. Each of the plurality of blockchain nodes 4 comprises an access permission SC 412 which records in the node storage unit 42, as an access right table 423, token validation data for validating a token when permitting access to a request for an access right to the provided data 21, and a token validation SC 413 which validates the token using the token validation data. The data acquisition server 1B comprises an access right acquisition unit 15 which requests the access permission SC 412 to grant an access right to the provided data 21, and a data acquisition unit 16 which sends the token to the data provision server 1A and acquires the data. The data provision server 1A comprises an access right validation unit 13 which causes the token validation SC 413 to validate the token sent from the data acquisition server 1B, and a data provision unit 12 which provides the data to the data acquisition server 1B when validation by the access right validation unit 13 is successful. It is thereby possible to transfer the data stored outside the blockchain. For example, when the data size of the provided data 21 is large, to retain the provided data 21 inside the blockchain will result in a high processing load, and cannot be realized easily. Nevertheless, according to the data transfer system 100, the processing load of the blockchain node 4 is constant irrespective of the data size of the provided data 21, and there are significant advantages when the data size of the provided data 21 is large.
(2) Each of the plurality of blockchain nodes 4 comprises a data registration SC 411. The data provision server 1A comprises a data registration unit 11 which sends a hash value of the provided data 21 to the data registration SC 411. The data registration SC 411 registers the hash value received from the data registration unit 11 in the node storage unit 42. The data acquisition server 1B comprises a data validation unit 17 which calculates a hash value of the provided data 21 acquired from the data provision server 1A, and compares it with the hash value described in the hash table 421. Thus, the data acquisition server 1B can confirm whether the acquired provided data 21 is the intended data.
(3) The access permission SC 412 generates token generation data for generating the token, and the token validation data, and generates the token by using the token generation data.
(4) The token generation data and the token validation data are a pair of a private key and a public key; that is, a key pair. The access permission SC 412 uses, as the token, an electronic signature generated using the token generation data, which is a private key, in relation to an access right ID as an identifier for identifying a request for access permission. The token validation SC 413 validates the electronic signature of the token using the the token validation data, which is a public key.
(5) The data acquisition server 1B comprises a data validation unit 17 which causes the token validation SC 413 to validate the token when provision of the data from the data provision server 1A is denied. Thus, the data acquisition server 1B can independently confirm whether the processing of the data provision server 1A that denied the provision of data was appropriate.
(6) The token validation SC 413 records a validation result of the token in the node storage unit 42 as the validation history table 422. Thus, ex-post validation is facilitated.

### (Modified example 1)

In the first embodiment described above, the access permission SC 412 generated a token and sent it to the data acquisition server 1B. Nevertheless, the data acquisition server 1B may also independently generate a token and send the token validation data to the access permission SC 412. Here, the access permission SC 412 registers the received token validation data in the access right table 423 only when permitting access, and discards the received token validation data when it will not permit access.

Fig. 14 is a flowchart showing the processing of the access right acquisition unit 15 in modified example 1. The access right acquisition unit 15 foremost, in step S371, generates token generation data and token validation data. The token generation data is, for example, a private key, and the token validation data is, for example, a public key. In subsequent step S372, the access right acquisition unit 15 decides the access right ID. The access right acquisition unit 15 may decide the access right ID so that it has uniqueness in the data transfer system 100, and, for example, may use serial numbers or the date and time at the time of processing.

In subsequent step S311B, the access right acquisition unit 15 calls the access permission SC 412 of the blockchain and requests access permission to the provided data 21, and receives the result of the request. Specifically, the access right acquisition unit 15 calls the access permission SC 412 of the blockchain together with the user ID of the user requesting the access right, the data ID of the provided data 21 designated by the user, the token validation data generated in step S371, and the access right ID decided in step S372.

In subsequent step S373, the access right acquisition unit 15 proceeds to step S374 when it determines that the request for access permission in step S311B was successful, and ends the processing shown in Fig. 14 when it determines that the request was unsuccessful. In step S374, the access right acquisition unit 15 uses the token generation data generated in step S371 and generates a token. Specifically, the access right acquisition unit 15 generates an electronic signature using the token generation data as a private key intended for the access right ID decided in step S372, and uses this electronic signature as a token.

Fig. 15 is a flowchart showing the processing of the access permission SC 412 in modified example 1. In Fig. 15, processing that is the same as the processing of Fig. 9 in the first embodiment is given the same step number, and the explanation thereof is omitted. The processing of step S321 and step S322 performed by the access permission SC 412 is the same as the first embodiment. Nevertheless, the access permission SC 412 proceeds to step S326A when it obtains a positive determination in step S322; that is, when it determines that the access right has already been granted, and proceeds to step S324A when it obtains a negative determination; that is, when it determines that the access right has not been granted.

In step S324A, the access permission SC 412 generates a new record including the received data ID, user ID, access right ID, and token validation data, records it in the access right table 423, and then proceeds to step S326A. In step S326A, the access permission SC 412 notifies the access permission to the data acquisition server 1B that sent the request for access permission, and then ends the processing shown in Fig. 15. Note that, when a negative determination is obtained in step S321, the access permission SC 412 may notify that access is not permitted to the data acquisition server 1B that sent the request for access permission, and then end the processing shown in Fig. 15.

According to this modified example 1, the following effects are yielded.

(7) The access right acquisition unit 15A generates token generation data and the token validation data, which are a pair of a private key and a public key, generates the token using the token generation data, and sends the token validation data to the access permission SC 412. When the access permission SC 412 permits access to a request for an access right to the provided data 21 (S313 of Fig. 7: NO), it records the token validation data received from the access right acquisition unit 15A in the access right table 423 of the node storage unit 42. Thus, sharing of the token generation data in the blockchain node 4 is no longer required.

Note that, in this modified example 1, while the access right acquisition unit 15A generated the token generation data and the token validation data as a part of the processing of acquiring the access right, the token generation data and the token validation data may also be generated in advance. Furthermore, the access right acquisition unit 15A may, without generating the token generation data and the token validation data, use the token generation data and the token validation data that are separately generated.

### (Modified example 2)

In the embodiment described above, the data provision server 1A and the data acquisition server 1B as specific examples of the command servers 1 had different functional blocks. Nevertheless, the command servers 1 may also have the substantially same configuration.

Fig. 16 is a functional block diagram of the command server 1 in modified example 2. A first command server 1-1 and a second command server 1-2 each comprise a data registration unit 11, a data provision unit 12, an access right validation unit 13, a blockchain access unit 14, an access right acquisition unit 15, a data acquisition unit 16, and a data validation unit 17. In other words, the first command server 1-1 and the second command server 1-2 each are also operable as the data provision server 1A in the first embodiment, and also operable as the data acquisition server 1B. According to this modified example 2, the same server may comprise a plurality of functions.

In each of the embodiments and modified examples explained above, the configuration of the functional blocks is merely an example. Several functional configurations indicated as separate functional blocks may be configured integrally, or the configuration expressed as one functional block diagram may be divided into two or more functions. Moreover, the configuration may also be such that a part of the functions equipped in the respective functional blocks is equipped in other functional blocks.

In each of the embodiments and modified examples explained above, while the programs were stored in the ROM 92, the programs may also be stored in the storage device 96. Moreover, the arithmetic unit 9 may comprise an input/output interface (not shown), and the programs may be read from another device when required via the input/output interface and a medium that can be used by the arithmetic unit 9. Here, a medium means, for example, a storage medium that can be attached to and detached from the input/output interface, or a communication medium; that is, a wired, wireless or optical network, or carrier waves or digital signals that propagate the network. Moreover, a part or all of the functions realized by the programs may be realized with a hardware circuit or an FPGA.

Each of the embodiments and modified examples explained above may be combined. While various embodiments and modified examples were explained above, the present invention is not limited to the subject matter thereof. Other modes considered to fall within the technical scope of the present invention also fall within the scope of the present invention.

### REFERENCE SIGNS LIST

- 1 ...: command server
- 1A ...: data provision server
- 1B ...: data acquisition server
- 4 ...: blockchain node
- 11 ...: data registration unit
- 12 ...: data provision unit
- 13 ...: access right validation unit
- 14 ...: blockchain access unit
- 15, 15A ...: access right acquisition unit
- 16 ...: data acquisition unit
- 17 ...: data validation unit
- 21 ...: provided data

## Claims

1. A data transfer system comprising a plurality of blockchain nodes having a node storage unit, a data provision server that retains data, and a data acquisition server that does not have the data, wherein
each of the plurality of blockchain nodes comprises an access permission smart contract which records in the node storage unit, as access right information, token validation data for validating a token when permitting access to a request for an access right to the data, and a token validation smart contract which validates the token using the token validation data,
the data acquisition server comprises:
an access right acquisition unit which requests the access permission smart contract to grant an access right to the data; and
a data acquisition unit which sends the token to the data provision server and acquires the data, and
the data provision server comprises:
an access right validation unit which causes the token validation smart contract to validate the token sent from the data acquisition server; and
a data provision unit which provides the data to the data acquisition server when validation by the access right validation unit is successful.

2. The data transfer system according to claim 1, wherein
each of the plurality of blockchain nodes comprises a data registration smart contract,
the data provision server further comprises a data registration unit which sends a hash value of the data to the data registration smart contract,
the data registration smart contract registers the hash value received from the data registration unit to hash information stored in the node storage unit, and
the data acquisition server further comprises a data validation unit which calculates a hash value of the data acquired from the data provision server, and compares it with the hash value described in the hash information.

3. The data transfer system according to claim 1, wherein
the access permission smart contract generates token generation data for generating the token, and the token validation data, and generates the token by using the token generation data.

4. The data transfer system according to claim 3, wherein
the token generation data and the token validation data are a pair of a private key and a public key,
the access permission smart contract uses, as the token, an electronic signature generated using the token generation data, which is a private key, in relation to an access right ID as an identifier for identifying a request for access permission, and
the token validation smart contract validates the electronic signature of the token using the the token validation data, which is a public key.

5. The data transfer system according to claim 1, wherein
the access right acquisition unit generates token generation data and the token validation data, which are a pair of a private key and a public key, generates the token using the token generation data, and sends the token validation data to the access permission smart contract, and
the access permission smart contract records the token validation data received from the access right acquisition unit in the node storage unit when permit a request for access right to the data.

6. The data transfer system according to claim 1, wherein
the data acquisition server further comprises an acquisition-side access right validation unit which causes the token validation smart contract to validate the token when provision of the data from the data provision server is denied.

7. The data transfer system according to claim 1, wherein
the token validation smart contract records a validation result of the token in the node storage unit as validation history information.

8. A data transfer method to be executed by a data transfer system including a plurality of blockchain nodes having a node storage unit, a data provision server that retains data, and a data acquisition server that does not have the data, wherein
each of the plurality of blockchain nodes comprises an access permission smart contract which records in the node storage unit, as access right information, token validation data for validating a token when permitting access to a request for an access right to the data, and a token validation smart contract which validates the token using the token validation data,
the data acquisition server executes:
access right acquisition processing of requesting the access permission smart contract to grant an access right to the data; and
data acquisition processing of sending the token to the data provision server and acquiring the data, and
the data provision server executes:
access right validation processing of causing the token validation smart contract to validate the token sent from the data acquisition server; and
data provision processing of providing the data to the data acquisition server when validation in the access right validation processing is successful.
